# EUROPÄISCHE PATENTSCHRIFT

(11) **EP 0 350 804 B1**
(45) Veröffentlichungstag und Bekanntmachung des Hinweises auf die Patenterteilung: **20.04.1994**
(21) Anmeldenummer: 89112427.3
(22) Anmeldetag: 07.07.1989
(51) Int. Cl.: C07F 7/12, C07F 7/08

(54) **Verfahren zur Herstellung von Halosilanen**
Process for the preparation of halosilanes
Procédé pour la préparation d'Halosilanes

(30) Priorität: 15.07.1988 DE 3823979
(43) Veröffentlichungstag der Anmeldung: 17.01.1990
(73) Patentinhaber: HOECHST AKTIENGESELLSCHAFT, 65926 Frankfurt am Main (DE)
(72) Erfinder: Schubert, Hans Herbert, Dr., D-6000 Frankfurt am Main 71 (DE)

(56) Entgegenhaltungen:
- EP-A- 0 224 024
- MONATSHEFTE FÜR CHEMIE, Band 106, 1975, Seiten 893-904, Springer-Verlag; F. HÖFLER et al.: "Die Hydrohalogenierung von Hexaphenyldigerman und die Schwingungsspektren einiger Ge2(C6H5)nX6-n-Verbindungen"
- JOURNAL OF ORGANOMETALLIC CHEMISTRY, Band 315, 1986, Seiten 1-8, Elsvier Sequoia S.A., Lausanne, CH; W. HAUBOLD et al.: "Darstellung von Arylhalogenboranen"
- CAN. J. CHEM., Band 63, Nr. 2, 1985, Seiten 329-332; P.C. SRIVASTAVA et al.: "Halogenodephylation of triphenyltin(IV) pseudohalides"

## Beschreibung

Gegenstand der vorliegenden Erfindung ist ein Verfahren zur Herstellung von Verbindungen der Formel I 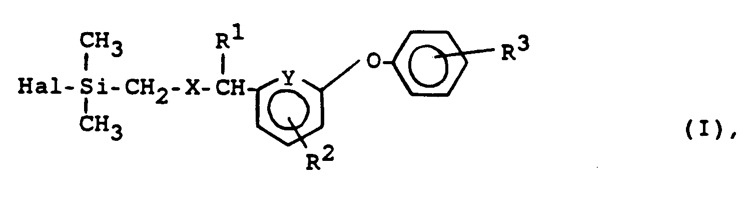
worin
Hal = F, Cl, Br oder J,
X ⁼ O, S oder CH₂,
Y = CH oder N
R¹ = H oder (C₁-C₄)Alkyl,
R² = H, F, Cl oder Br und
R³ = H, F, Cl, Br, (C₁-C₄)Alkyl oder (C₁-C₄)Alkoxy bedeuten, dadurch gekennzeichnet, daß man eine Verbindung der Formel II 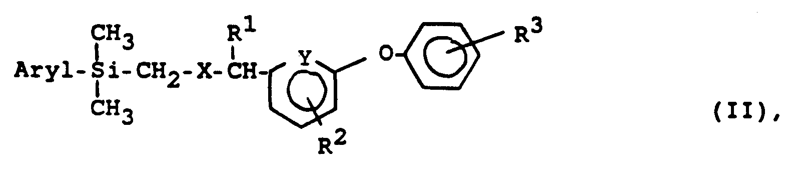
worin Aryl für einen unsubstituierten oder substituierten Phenyl-, Naphthyl- oder Thienyl-Rest der Formeln (A), (B) oder (C) steht 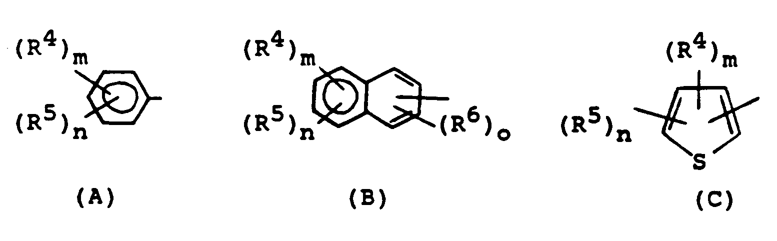
worin R⁴, R⁵ und R⁶ unabhängig voneinander H, (C₁-C₅)-Alkyl, (C₁-C₅)-Alkoxy, (C₁-C₅)-Alkylthio, Di-(C₁-C₄)-Alkylamino, Phenoxy, Phenylthio oder Phenyl und m, n und o unabhängig voneinander die Werte 0, 1 oder 2 bedeuten, und X, Y, R¹, R² und R³ die Bedeutung wie in Formel I besitzen,
mit einem Halogen oder einer Halogenverbindung der Formel III

Halₚ - Z_{q} (III),

worin Z = F, Cl, Br, J, H, PHal₄ oder SO₂Hal und p, q unabhängig voneinander die Werte 1 bis 5 bedeuten und Hal die Bedeutung wie in Formel I besitzt,
umsetzt.

Bevorzugte Edukte der Formel II besitzen für Aryl einen unsubstituierten, mono- oder disubstituierten Phenylrest der Formel A. Bevorzugte Halogenierungsmittel der Formel III sind solche mit p, q = 1, wie z. B. Halogene, insbesondere Chlor oder Brom, wasserfreie Halogenwasserstoffe sowie Sulfurylhalogenide und Phosphor(V)halogenide.

Die Verbindungen der Formel I und II sind bekannt und besitzen als insektizide, akarizide oder nematozide Wirkstoffe (Verbindungen der Formel II : EP-A-0224 024) bzw. deren Vorstufen (Verbindungen der Formel I EP-A-0224024, EP-A 0249015) Bedeutung.

In diesen europ. Offenlegungsschriften werden ebenfalls Verfahren zur Herstellung dieser Verbindungen beschrieben. Die dort erwähnten Verfahren zur Herstellung der Zwischenprodukte der Formel I sind z. T. verfahrenstechnisch recht aufwendig und führen nicht zu Produkten in einer solchen Reinheit, daß diese direkt zu einer weiteren Umsetzung verwendet werden könnten. Da die Verbindungen der Formel I sehr leicht in Derivate der Verbindungen der Formel II, bei denen Si anstelle von Aryl durch einen heterozyklischen Rest wie z. B. Pyridyl substituiert ist, überführt werden können (vgl. Ausführungsbeispiele 1 und 2) und diese als insektizide oder akarizide Wirkstoffe besondere Bedeutung besitzen, war es Aufgabe der vorliegenden Erfindung, ein verfahrenstechnisch einfaches und gleichzeitig selektives Verfahren zur Herstellung der Verbindungen I bereitzustellen.

Ausgehend von den Verbindungen der Formel II war beim erfindungsgemäßen Verfahren insbesondere die selektive und mit guten Ausbeuten verlaufende Bildung der Verbindungen der Formel I überraschend. Während Benzyl-alkyl-ether und insbesondere Benzyl-alkyl-sulfide üblicherweise bereits unter sehr milden Bedingungen in der benzylischen Stellung halogeniert werden (siehe: H. Böhme und A. Dörries, Chem. Ber. 89, 723 (1956); H. Böhme und H.J. Gran, Liebigs Ann. Chem. 577, 68 (1952)), erfolgt der Angriff des Halogenierungsmittels im Falle der Edukte der Formel II nicht an der benzylischen Position, sondern selektiv an der Arylsiliciumbindung unter Bildung der so leicht zugänglichen Halosilane der Formel I. Die besten Ausbeuten werden dabei erzielt, wenn man die Umsetzung in apolaren bis schwach polaren aprotischen Solventien wie z. B. Heptan, Hexan, Pentan, Cyclohexan, Benzol, halogenierten Benzolen, Ethern, Methylenchlorid, Chloroform oder Tetrachlorkohlenstoff bei Temperaturen von - 78°C bis 80°C durchführt, wobei der optimale Temperaturbereich und das Lösungsmittel mit dem abzuspaltenden Arylrest und dem eingesetzten Halogenierungsmittel variieren. Während Umsetzungen der Edukte II mit Chlor bereits bei Temperaturen von - 70°C bis - 10°C ablaufen, lassen sich die entsprechenden Silyljodide bevorzugt bei Temperaturen von 0 - 80°C und deutlich längeren Reaktionszeiten gewinnen. Elektronenreiche Arylreste wie z. B. der p-Anisylrest werden in diesen Reaktionen bei einer gegebenen Temperatur erheblich rascher abgespalten als der unsubstituierte Phenylrest. Die Wahl des Lösungsmittels wird so getroffen, daß dieses weder mit dem Halogenierungsmittel III noch mit den Endprodukten I Nebenreaktionen eingehen kann. So setzt man in Umsetzungen mit Chlor bevorzugt Tetrachlormethan oder chlorierte Benzolderivate wie o-Dichlorbenzol u.a. als Lösungsmittel ein. Chlorwasserstoff hingegen läßt sich auch in etherischen Solventien wie Diethylether, THF, Ethylenglykol-, Diethylenglykol-, Triethylenglykol-, Tetraethylenglykol- und Polyethylenglykol-dialkylethern zur Anwendung bringen.

Pro Mol des Ausgangssilans werden 1 - 1,1 Moläquivalente, bevorzugt 1 - 1,02 Moläquivalente des Halogenierungsmittels verwendet. Eventuell eingesetzte Überschüsse werden nach Abschluß der Reaktion durch Zugabe kleiner Mengen eines Bindemittels, z. B. eines Olefins wie Cyclohexen, entfernt.

Die Isolierung der Zielprodukte I erfolgt überlicherweise durch Destillation. Bevorzugt werden jedoch die Lösungen der so gewonnnenen Silylhalogenide I direkt für Silylierungsreaktionen verwendet. Dazu ist es in manchen Fällen notwendig, das ursprünglich verwendete Lösungsmittel gegen ein für die Folgereaktion besser geeignetes Verdünnungsmittel auszutauschen.

Das erfindungsgemäße Verfahren wird durch die nachfolgenden Beispiele verdeutlicht

### Ausführungsbeispiele

1. Herstellung und Umsetzung von (Brom)-(dimethyl)-(3-phenoxybenzylthio-methyl)-silan (I; Hal = Br, X = S, Y = CH, R¹ = R² = R³ = H).
   4.1 g (10 mMol) (Dimethyl)-(p-dimethylaminophenyl)-(3-phenoxy-benzylthio-methyl)-silan werden in 10 ml wasserfreiem Benzol gelöst und unter Eiskühlung tropfenweise mit der Lösung von 1.6 g (10 mMol) Brom in 5 ml Benzol versetzt.
   Die so erhaltene Lösung der Titelverbindung (Ausbeute: 76 % d. Th.) tropft man direkt bei -70°C zu einer aus 2.1 g (10 mMol) 5-Brom-2-ethoxypyridin und 4 ml 2.5 M-n-Butyllithiumlösung in 30 ml THF bereiteten Lösung von 2-Ethoxy-5-lithiopyridin. Nach Erwärmen auf Raumtemperatur gießt man die Mischung auf 200 ml Eiswasser und extrahiert das Produkt mit Heptan. Der beim Eindampfen des Extraktes verbleibende Rückstand wird an 110 g Kieselgel mit Methylenchlorid chromatographiert. Man erhält 1.9 g (46 %) (2-Ethoxypyrid-5-yl)-(dimethyl)-(3-phenoxy-benzylthio-methyl)-silan als blaßgelbes Öl.
2. Herstellung und Umsetzung von (Brom)-(dimethyl)-(3-phenoxy-benzyloxy-methyl)-silan (I; Hal=Br, X=O, Y=CH, R¹=R²=R³=H).
   5.9 g (15 mMol) (Dimethyl)-(p-phenetyl)-(3-phenoxy-benzyloxy-methyl)-silan werden in 10 ml wasserfreiem Benzol gelöst und bei 0 - 6°C tropfenweise mit der Lösung von 2.6 g (16.3 mMol) Brom in 10 ml Benzol versetzt. Nach beendeter Zugabe rührt man noch 5 min und vernichtet dann das überschüssige Halogen durch Zugabe von 15 Tropfen Cyclohexen.
   Die so erhaltene Silylbromidlösung (Ausbeute 86 % d.Th.) wird zu der aus 3.3. g (15 mMol) 5-Brom-2-ethylthiopyridin und Butyllithiumlösung wie üblich bereiteten THF-Lösung von 2-Ethylthio-5-lithiopyridin bei - 70°C bis - 60°C getropft. Die gleiche Aufarbeitung wie in Beispiel 1 liefert 4.3 g (70 %) (2-Ethylthiopyrid-5-yl)-(dimethyl)-(3-phenoxy-benzyloxy-methyl)-silan als blaßgelbes Öl.

## Patentansprüche

1. Verfahren zur Herstellung von Verbindungen der Formel I 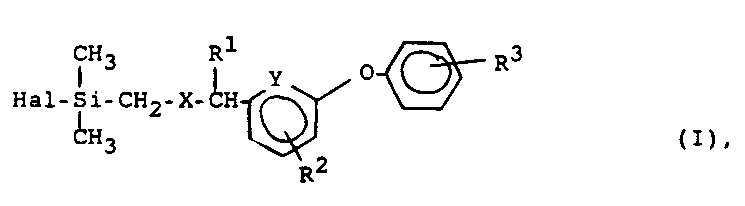 worin
Hal = F, Cl, Br oder J,
X ⁼ O, S oder CH₂,
Y = CH oder N
R¹ = H oder (C₁-C₄)Alkyl,
R² = H, F, Cl oder Br und
R³ = H, F, Cl, Br, (C₁-C₄)Alkyl oder (C₁-C₄)Alkoxy bedeuten, dadurch gekennzeichnet, daß man eine Verbindung der Formel II 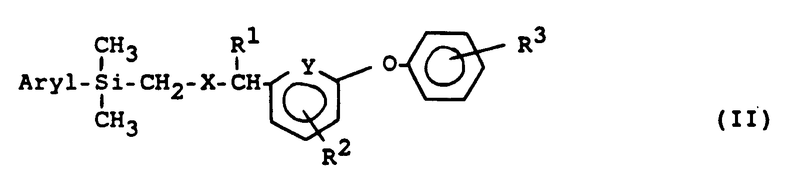 worin Aryl für einen unsubstituierten oder substituierten Phenyl-, Naphthyl- oder Thienyl-Rest der Formeln (A), (B) oder (C) steht 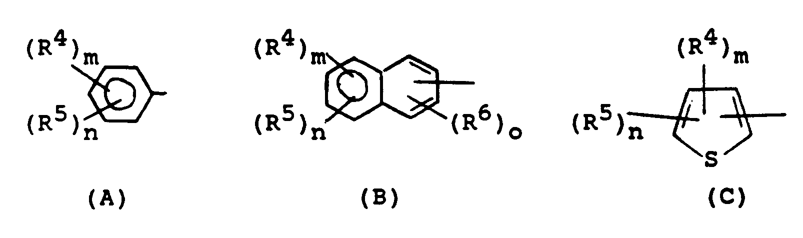 worin R⁴, R⁵ und R⁶ unabhängig voneinander H, (C₁-C₅)-Alkyl, (C₁-C₅)-Alkoxy, (C₁-C₅)-Alkylthio, Di-(C₁-C₄)-Alkylamino, Phenoxy, Phenylthio oder Phenyl und m, n und o unabhängig voneinander die Werte 0, 1 oder 2 bedeuten, und X, Y, R¹, R² und R³ die Bedeutung wie in Formel I besitzen,
mit einem Halogen oder einer Halogenverbindung der Formel III
Halₚ - Z_{q} (III),
worin Z = F, Cl, Br, J, H, PHal₄ oder SO₂Hal und p, q unabhängig voneinander die Werte 1 bis 5 bedeuten und Hal die Bedeutung wie in Formel I besitzt,
umsetzt.

2. Verfahren gemäß Anspruch 1, dadurch gekennzeichnet, daß man die Verbindung der Formel II mit der Verbindung der Formel III bei Temperaturen zwischen - 78°C und 80°C umsetzt.

3. Verfahren gemäß Anspruch 1 oder 2, dadurch gekennzeichnet, daß man die Verbindung der Formel II mit der Verbindung der Formel III bei Temperaturen zwischen 0°C und 80°C umsetzt

4. Verfahren gemäß einem oder mehreren der Ansprüche 1 bis 3, dadurch gekennzeichnet, daß man die Reaktion in Benzol als Lösungsmittel durchführt.

## Claims

1. A process for the preparation of compounds of the formula I 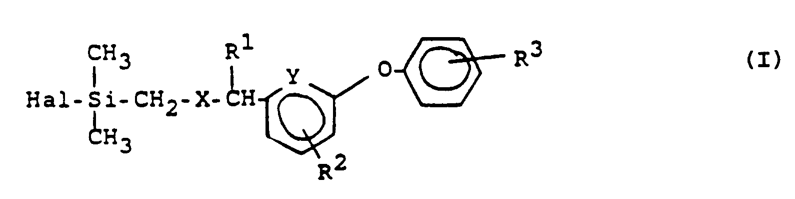 in which
Hal denotes F, Cl, Br or I,
X denotes O, S or CH₂,
Y denotes CH or N,
R¹ denotes H or (C₁-C₄)alkyl,
R² denotes H, F, Cl or Br and
R³ denotes H, F, Cl, Br, (C₁-C₄)alkyl or (C₁-C₄)alkoxy, which comprises reacting a compound of the formula II 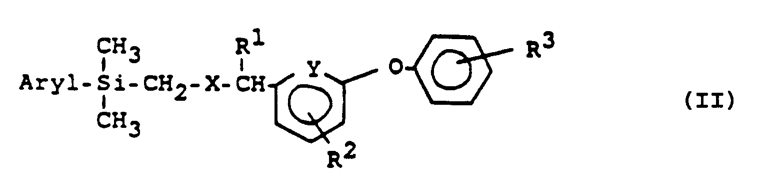 in which Aryl represents an unsubstituted or substituted phenyl, naphthyl or thienyl radical of the formula (A), (B) or (C) 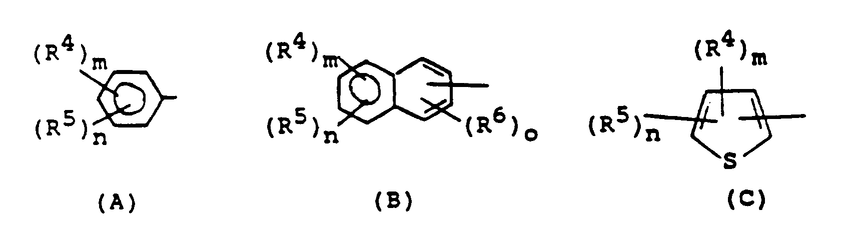 in which R⁴, R⁵ and R⁶ independently of each other denote H, (C₁-C₅)-alkyl, (C₁-C₅)-alkoxy, (C₁-C₅)-alkylthio, di-(C₁-C₄)-alkylamino, phenoxy, phenylthio or phenyl and m, n and o independently of each other denote the values 0, 1 or 2, and X, Y, R¹, R² and R³ are as defined in formula I,
with a halogen or a halogen compound of the formula III
Halₚ - Z_{q} (III)
in which Z denotes F, C, Br, I, H, PHal₄ or SO₂Hal and p and q independently of each other denote the values 1 to 5 and Hal is as defined in formula I.

2. The process as claimed in claim 1, wherein the compound of the formula II is reacted with the compound of the formula III at temperatures between -78°C and 80°C.

3. The process as claimed in claim 1 or 2, wherein the compound of the formula II is reacted with the compound of the formula III at temperatures between 0°C and 80°C.

4. The process as claimed in one or more of claims 1 to 3, wherein the reaction is carried out in benzene as a solvent.

## Revendications

1. Procédé de préparation des composés de formule I 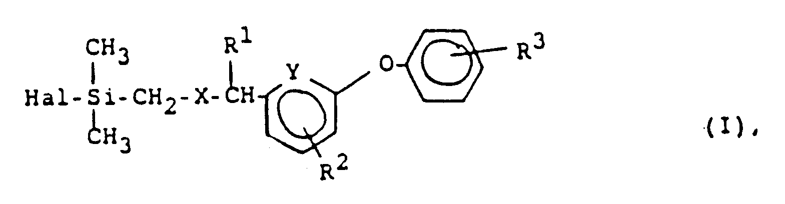 dans laquelle :
Hal = F, Cl, Br ou I,
X = O, S ou CH₂,
Y = CH ou N,
R¹ = H ou un groupe alkyle en C₁-C₄,
R² = H, F, Cl ou Br et
R³ = H, F, Cl, Br, un groupe alkyle en C₁-C₄ ou un groupe alkoxy en C₁-C₄, **caractérisé** en ce que l'on fait réagir un composé de formule II 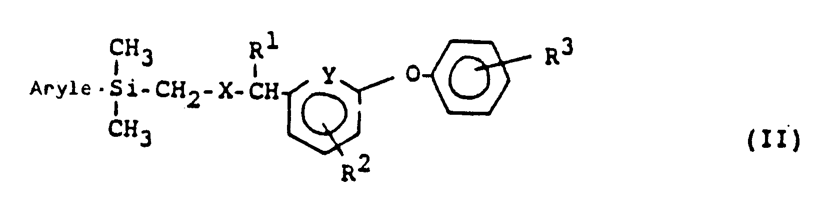 le radical aryle représentant un radical thiényle, naphthyle, ou phényle, non substitué ou substitué, appartenant à l'une des formules (A), (B) ou (C) ci-dessous : 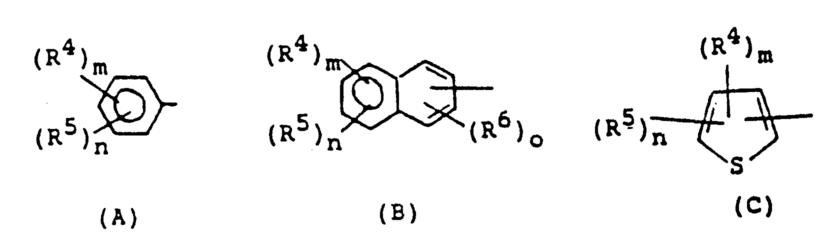 dans lesquelles R⁴, R⁵ et R⁶, indépendamment les uns des autres, représentent un atome d'hydrogène, un groupe alkyle en C₁-C₅, un groupe alkoxy en C₁-C₅, un groupe alkylthio en C₁-C₅, un groupe di-(alkyle en C₁-C₄)-amino, un groupe phénoxy, un groupe phénylthio ou un groupe phényle, et n, m et o indépendamment les uns des autres, peuvent prendre les valeurs 0, 1 ou 2, et X, Y, R¹, R² et R³ sont tels que définis en relation avec la formule I,
sur un atome d'halogène ou sur un composé halogéné de formule III
Halₚ - Z_{q} (III)
dans laquelle Z = F, Cl, Br, I, H, PHal₄ ou SO₂Hal et p, q représentent indépendamment l'un de l'autre, une valeur choisie dans le groupe formé par les nombres de 1 à 5, et Hal est tel que défini en relation avec la formule I.

2. Procédé selon la revendication 1, **caractérisé** en ce que l'on fait réagir le composé de formule II sur le composé de formule III à une température comprise entre - 78°C et 80°C.

3. Procédé selon la revendication 1 ou 2, **caractérisé** en ce que l'on fait réagir le composé de formule II sur le composé de formule III à des températures comprises entre 0°C et 80°C.

4. Procédé selon une ou plusieurs des revendications 1 à 3, **caractérisé** en ce que l'on conduit la réaction en utilisant le benzène comme solvant.
